# EUROPEAN PATENT APPLICATION

(11) **EP 1 967 412 A1**
(43) Date of publication of application: **10.09.2008**
(21) Application number: 07112509.0
(22) Date of filing: 16.07.2007
(51) Int. Cl.: B60N 2/46

(54) **Seat for public transportation vehicles**

(30) Priority: 05.03.2007 ES 200700569
(71) Applicant: Fabricacion Asientos Vehiculos Industriales, S.A., 08107 Martorelles (ES)
(72) Inventor: Singla Casasayas, Juan Fabricacion Asientos Vehiculos Industriales, S.A., 08107 Martorelles (ES)
(74) Representative: Ponti Sales, Adelaida

(57) **Abstract**

It comprises a seat portion (1) where the user seats, a backrest (2), and at least one armrest (3) foldable between a substantially horizontal position and a substantially vertical position by hinge means (4), said at least one armrest (3) describing a curved path directed downwardly in its rotating movement from its substantially horizontal position to its substantially vertical position. It is characterised in that said at least one armrest (3) comprises guiding means (5, 6) of its foldable movement, and locking means (5a, 6a, 9, 10) to prevent its movement in the axial direction (X) of the hinge means (4).

It is obtained a good operation of said at least one armrest during its folding movement, and it is also prevented any undesired movement in the rotating axial direction, and therefore it is very comfortable and safe of use.

## Description

The present invention refers to a seat for vehicles of public transport.

### BACKGROUND OF THE INVENTION

The seats used nowadays in vehicles of public transport, such as coaches, trains, buses or aeroplanes, comprise a seat portion where the user seats and a backrest. For a greater comfort of the user, the backrest can be hinged about the seat portion, and it can take an inclined backward position or a substantially vertical position.

This kind of seats usually also comprise foldable armrests from a substantially horizontal position and a substantially vertical position, to make the entrance to the seating space easier.

Usually, the armrests are hinged at the rear part of the seat portion, so that when the armrest is placed at its vertical position from its horizontal position, the armrest describes an upward path, and the armrest remains in the vertical position next to the backrest, and protruding also completely at a level above the upper part of the seat portion.

This kind of armrests has the drawback that they are uncomfortable when they are at its vertical position because they take up too much space, which is especially important because the seat used in vehicles of public transport must satisfy a minimum width of the aisle.

This drawback is increased when two double seat are placed, one at each side of the aisle of the vehicle, with the armrests between both seats, because these armrests take up too much space at its vertical position, making difficult to pass along the central aisle of the vehicle.

It is also known the seat for vehicles of public transport described in the Spanish utility model no. 200500859, of the same holder than the present application, comprising a seat portion where the user seats, a backrest, and at least a foldable armrest between a substantially horizontal position and a substantially vertical position by hinge means. Said armrest describes a path directed downwardly in its movement from its substantially horizontal position to its substantially vertical position, according to a curved path. Furthermore, this armrest, at its substantially vertical position, does not protrude frontally from said backrest.

Furthermore, this kind of armrest is covered by a protective casing provided at the sides of the seat, so that the lower part of the armrest, where it is the rotation mechanism, is always hidden inside said casing, independently from the position in which the armrest is placed.

To use a side casing implies an increase in the cost of the material used, and also a greater structural complexity. Furthermore, these side casings increase the whole width of the seat, which is a drawback as stated previously.

Another drawback of this kind of armrests is that during its rotation movement about its hinge axis, undesired movements can be carried out in the axial direction of rotation, which makes its correct operation more difficult.

### DESCRIPTION OF THE INVENTION

With the seat of the invention said drawbacks can be solved, presenting other advantages that will be described.

The seat for vehicles of public transport, object of the present invention, comprising a seat portion where the user seats, a backrest, and at least one armrest foldable between a substantially horizontal position and a substantially vertical position by hinge means, said at least one armrest describing a curved path directed downwardly in its rotating movement from its substantially horizontal position to its substantially vertical position, and it is characterised in that said at least one armrest comprises guiding means of its foldable movement, and locking means to prevent its movement in the axial direction of the hinge means.

Therefore, the guiding means guarantee a good operation during its folding movement, and the locking means guarantee said folding movement without undesired movements in the rotating axial direction, and therefore it is so much comfortable and safe to use said at least one armrest.

According to an embodiment of the present invention, said guiding means of the folding movement comprises a sliding guide made in said at least one armrest, and a pivot engaged to said sliding guide and fixed to a side wall of the seat portion, so that when said at least one armrest rotates, the sliding guide can slide with respect to said pivot.

Thanks to this simple structural configuration of the guiding means, it is obtained a reduction of the cost of material used, because it is not necessary any protecting casing to cover the mechanisms of said at least one armrest, as in the armrests known in the prior art. Furthermore, the total width of the seat is reduced, which is important because it must fulfil a minimum dimensions, the seat and also the aisle.

Preferably, the sliding guide presents a circle segment configuration, its geometrical centre being the hinge axis of said at least one armrest, so that the ends of the sliding guide itself define the stroke start and end of said folding movement.

Advantageously, the pivot comprises an anti-friction fitting fitted inside an orifice of the side wall, so that part of the external wall of said fitting is in contact with the walls of the sliding guide.

Also advantageously, said locking means comprises a threaded screw at an internal wall of the pivot to join, with some tolerance, said at least one armrest to the side wall of the seat portion, so that a rim of an end of the pivot rests on the rear face of the side wall of the seat portion, and so that a socket of the walls of the sliding guide rests against the head of the screw.

Optionally, between the head of the screw and the socket of the walls of the sliding guide is provided an auto-locking o-ring.

Preferably, the sliding guide comprises a covering lid.

### BRIEF DESCRIPTION OF THE DRAWINGS

For a better understanding of what has been described some drawings are attached in which, diagrammatically and only as a non limitative example, a practical case of embodiment is shown.
Fig. 1 is a partial lateral elevation view of the seat of the present invention, the armrest being at its substantially horizontal position;
Fig. 2 is a partial lateral elevation view of the seat of the present invention, the armrest being at its substantially vertical position;
Fig. 3 is an exploded perspective view of the armrest at its substantially horizontal position; and
Fig. 4 is a cross-section view of the lower part of the armrest of Fig. 3.

### DESCRIPTION OF A PREFERRED EMBODIMENT

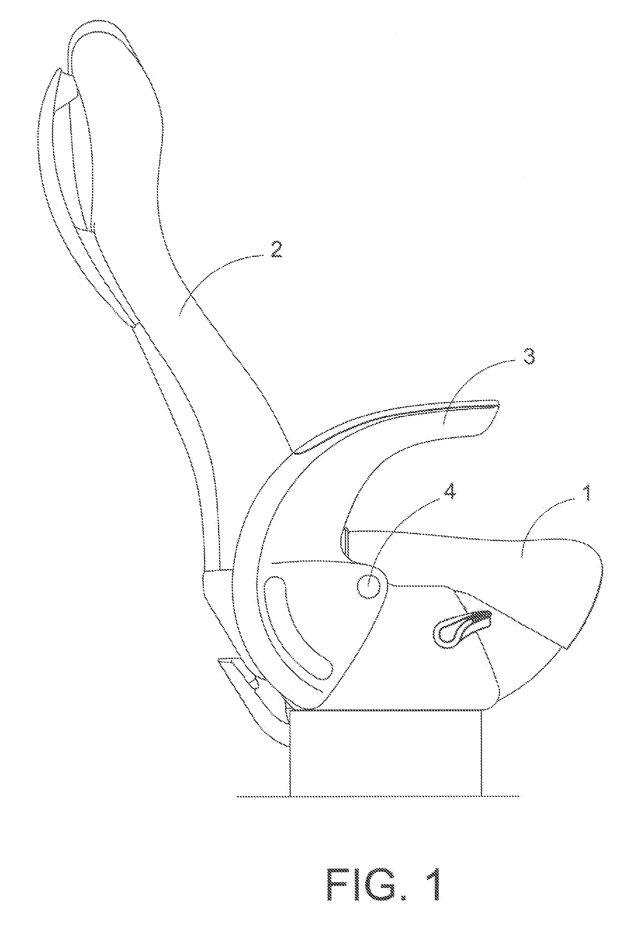

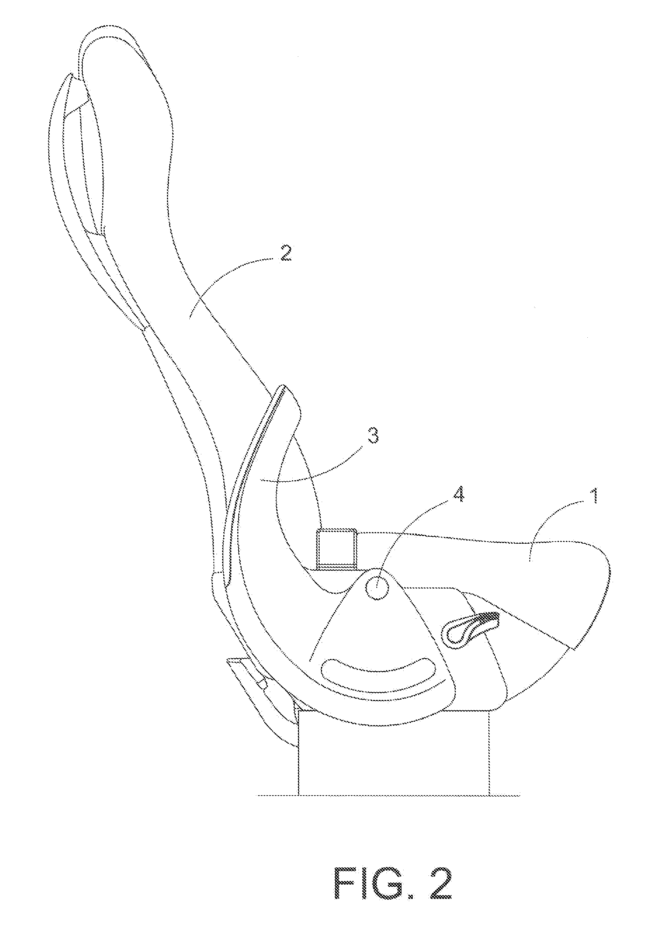

As it can be seen from Figs. 1 and 2, the seat of the present invention comprises a seat portion 1, where the user seats, a backrest 2, which preferably is hinged to the seat portion 1, so that it can be placed at the position shown in Figs. 1 and 2 or at a position inclined rearward, and foldable armrests 3, preferably one at each side of the seat portion 1. Said armrests 3 are foldable between a substantially horizontal position (Fig. 1) and a substantially vertical position (Fig. 2), thanks to hinge means 4.

According to the invention, the armrest 3 describes a curved path directed downwardly when the armrest 3 goes from its substantially horizontal position to its substantially vertical position.

The armrest 3 of the seat of the present invention has a curved profile.

As it can be seen in Fig. 2, the armrest 3, when it is at its vertical position, is almost completely under the upper level of the seat portion 1, and it does not protrude frontally from the backrest 2.

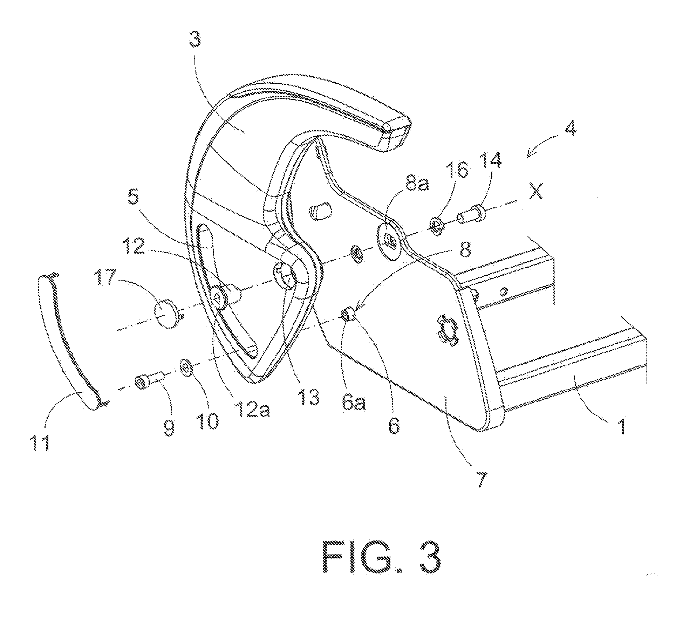

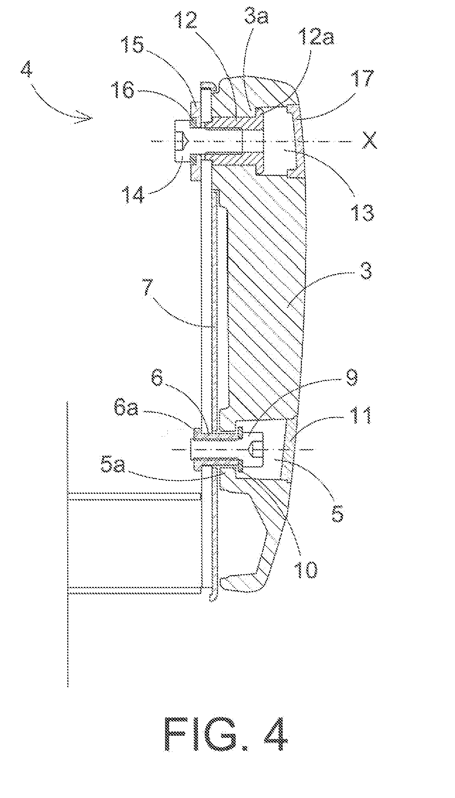

With reference to Figs. 3 and 4, the armrest 3 also comprises guiding means of its folding movement including a sliding guide 5 made in the armrest 3, and a pivot 6 engaged to said sliding guide 5 and fixed to a side wall 7 of the seat portion 1, so that when said armrest 3 rotates, the sliding guide 5 can slide with respect to said pivot 6.

The sliding guide 5 has a circle segment configuration, its geometrical centre being the hinge axis X of the armrest 3, so that the ends of the sliding guide 5 itself define the stroke start and end of said folding movement.

The pivot 6 includes an anti-friction fitting fitted inside an orifice 8 of the side wall 7, so that part of the external wall of said fitting 6 is in contact with the walls of the sliding guide 5.

Furthermore, the armrest 3 comprises locking means to prevent its movement in the axial direction X of said hinge means 4. Said locking means includes a threaded screw 9 in an internal wall of the fitting 6 to join, with some tolerance, the armrest 3 to the side wall 7 of the seat portion 1, so that a rim 6a of an end of the fitting 6 rests on the rear face of the side wall 7 of the seat portion 1, and so that a socket 5a of the walls of the sliding guide 5 rests against the head of a screw 9. Between the head of the screw 9 and the socket 5a of the walls of the sliding guide 5 is provided an auto-locking o-ring 10. Furthermore, the sliding guide 5 includes a covering lid 11.

On the other hand, the hinge means 4 comprises an anti-friction fitting 12 fitted inside an orifice 8a of the side wall 7, so that part of the external wall of said fitting 12 is in contact with an orifice 13 made in the armrest 3.

The hinge means 4 also comprises a threaded screw 14 in an internal wall of the fitting 12 to join, with some tolerance, said at least one armrest 3 to the side wall 7 of the seat portion 1, so that a rim 12a of an end of the fitting 12 rests on a socket 3a of the orifice 13 made at the armrest 3, and so that the head of said screw 14 rests on the rear face of the side wall 7 of the seat portion 1. Between the head of the screw 14 and the side wall 7 of the seat portion 1 it is provided a bush 15 and auto-locking o-ring 16. The orifice 13 associated to said hinge means includes a covering lid 17.

Even reference is made to an specific embodiment of the invention, it is apparent for a person skilled in the art that the described seat is susceptible of numerous variations and modifications, and that all the details can be substituted by other technically equivalent ones, without departing from the scope of protection defined by the attached claims.

## Claims

1. Seat for vehicles of public transport, comprising a seat portion (1) where the user seats, a backrest (2), and at least one armrest (3) foldable between a substantially horizontal position and a substantially vertical position by hinge means (4), said at least one armrest (3) describing a curved path directed downwardly in its rotating movement from its substantially horizontal position to its substantially vertical position, **characterised in that** said at least one armrest (3) comprises guiding means (5, 6) of its foldable movement, and locking means (5a, 6a, 9, 10) to prevent its movement in the axial direction (X) of the hinge means (4).

2. Seat according to claim 1, **characterised in that** said guiding means of the folding movement comprises a sliding guide (5) made in said at least one armrest (3), and a pivot (6) engaged to said sliding guide (5) and fixed to a side wall (7) of the seat portion (1), so that when said at least one armrest (3) rotates, the sliding guide (5) can slide with respect to said pivot (6).

3. Seat according to claim 2, **characterised in that** the sliding guide (5) presents a circle segment configuration, its geometrical centre being the hinge axis (X) of said at least one armrest (3), so that the ends of the sliding guide (5) itself define the stroke start and end of said folding movement.

4. Seat according to anyone of claims 2 or 3, **characterised in that** the pivot (6) comprises an anti-friction fitting fitted inside an orifice (8) of the side wall (7), so that part of the external wall of said fitting (6) is in contact with the walls of the sliding guide (5).

5. Seat according to anyone of claims 2 to 4, **characterised in that** said locking means comprises a threaded screw (9) at an internal wall of the pivot (6) to join, with some tolerance, said at least one armrest (3) to the side wall (7) of the seat portion (1), so that a rim (6a) of an end of the pivot (6) rests on the rear face of the side wall (7) of the seat portion (1), and so that a socket (5a) of the walls of the sliding guide (5) rests against the head of the screw (9).

6. Seat according to claim 5, **characterised in that** between the head of the screw (9) and the socket (5a) of the walls of the sliding guide (5) is provided an auto-locking o-ring (10).

7. Seat according to anyone of claims 2 to 6, **characterised in that** the sliding guide (5) comprises a covering lid (11).
